# EUROPEAN PATENT APPLICATION

(11) **EP 2 770 421 A2**
(43) Date of publication of application: **27.08.2014**
(21) Application number: 14155187.9
(22) Date of filing: 14.02.2014
(51) Int. Cl.: G06F 3/0488

(54) **Electronic device having touch-sensitive user interface and related operating method**

(30) Priority: 22.02.2013 KR 20130019409; 28.06.2013 KR 20130075230
(71) Applicant: Samsung Electronics Co., Ltd., Suwon-si Gyeonggi-do 443-742 (KR)
(72) Inventor: Yu, Donghun, 443-742 Gyeonggi-do (KR); Kim, Woogeun, 443-742 Gyeonggi-do (KR); Jeong, Hyesoon, 443-742 Gyeonggi-do (KR); Park, Chulhui, 443-742 Gyeonggi-do (KR); Hong, Sunyeal, 443-742 Gyeonggi-do (KR)
(74) Representative: Gover, Richard Paul

(57) **Abstract**

A method and electronic device are provided to process a touch screen event detected from a touch screen and to process an input key event detected from an input key. The input key may be installed near the touch screen panel. The method comprises detecting a first event comprising one of an input key event from the input key of the electronic device and a touch screen event from the touch screen and detecting a second event within a given time after the detection of the first event, the second event comprising the other of an input key event from the input key of the electronic device and a touch screen event from the touch screen. The method further comprises performing a function corresponding to the touch screen event while ignoring the input key event.

## Description

### BACKGROUND

### 1. Field of the Invention

The present invention relates generally to electronic devices having therein a touch-sensitive user interface and a related operating method.

### 2. Description of the Related Art

Recent electronic devices provide a variety of functions, and include a user interface (UI) for offering such functions to users. While conventional electronic devices have been provided with a simple UI such as a button or a keypad, recently various touch screen technologies are applied to UIs.

For example, mobile devices such as a smart phone or a tablet PC are based on various touch screen technologies. Additionally, touch screen technologies are also applied to many kinds of electronic devices or appliances.

An electronic device having a touch screen may further have, as another input unit, a touch key which is disposed in proximity to the touch screen. For example, a touch key may be installed near the bottom of a touch screen. In general, a touch key refers to all kinds of input units which can recognize a touch or approach of a human body or any other object, including electronic or mechanical keys. Herein, the term "touch key" may be sometimes replaced with the term "an input key".

When a user touches the lower boundary of a screen, so that a part of a touch input tool, such as a finger is in contact with the screen, and another part is in contact with a touch key, a control unit of a mobile device may detect a touch screen event and a touch key event, respectively, from a touch screen panel and a touch key, and thereby perform particular functions corresponding to these events.

A touch key event may occur regardless of the user's intention. For example, when the user desires to touch a certain icon displayed near the boundary of a screen, a touch key located adjacent to the icon and linked to a revert function may be unintentionally touched together. Therefore, a revert function may be performed regardless of the user's intention.

### SUMMARY

It is an aim of certain embodiments of the present invention to provide, when a touch key event is detected, an electronic device that determines the validity of the detected touch key event and, if this event is invalid, does not respond to the detected touch key event in order to prevent any unintended wrong operation.

Another aim of certain embodiments of the present invention is to provide a method and electronic device (e.g., a mobile device) for processing a user's input event, and for processing both a touch screen event detected from a touch screen panel provided in a screen and a touch key event detected from a touch key panel provided near the screen.

According to a first aspect of the present invention there is provided a method for operating an electronic device having a touch screen and an input key, the method comprising: detecting a first event comprising one of an input key event from the input key of the electronic device and a touch screen event from the touch screen; detecting a second event within a given time after the detection of the first event, the second event comprising the other of an input key event from the input key of the electronic device and a touch screen event from the touch screen; and performing a function corresponding to the touch screen event while ignoring the input key event.

According to a second aspect of the present invention there is provided an electronic device comprising: a touch screen; an input key; and a control unit configured to detect an input key event from the input key and a touch screen event from the touch screen; wherein if the control unit detects a second event comprising one of an input key event from the input key of the electronic device and a touch screen event from the touch screen within a given time after detecting a first key event comprising the other of an input key event from the input key of the electronic device and a touch screen event from the touch screen, the control unit is further configured to ignore the input key event and to perform a function corresponding to the touch screen event.

According to an embodiment of the present invention, a method for operating an electronic device having a touch screen panel is provided. The method includes detecting an input key event from an input key of the electronic device; detecting a touch screen event from the touch screen panel within a given time after the detection of the input key event; and performing a function corresponding to the touch screen event while ignoring the input key event.

According to another embodiment of the present invention, a method for operating an electronic device having a touch screen panel is provided. The method includes detecting a touch screen event from the touch screen panel; detecting an input key event from an input key of the electronic device within a given time after the detection of the touch screen event; and performing a function corresponding to the touch screen event while ignoring the input key event.

According to yet another embodiment of the present invention, an electronic device is provided that includes a touch screen panel; an input key installed near the touch screen panel; and a control unit configured to receive signals from the input key and the touch screen panel, detect a touch screen event from the touch screen panel within a given time after detecting an input key event from the input key, and to ignore the input key event while performing a function corresponding to the touch screen event.

According to another embodiment of the present invention an electronic device is provided that includes comprise a touch screen panel; an input key installed near the touch screen panel; and a control unit configured to receive signals from the input key and the touch screen panel, detect an input key event from the input key within a given time after detecting a touch screen event from the touch screen panel, and to ignore the input key event while performing a function corresponding to the touch screen event.

According to another embodiment of the present invention an electronic device an electronic device is provided that includes a touch screen; an input key installed near the touch screen; and a control unit configured to receive signals from the input key and the touch screen, wherein the control unit is further configured to begin a count when an input key event is detected from the input key, to determine whether the input key event is valid when a touch screen event is detected from the touch screen before a count time exceeds a predefined critical time, and when the input key event is invalid, to ignore the input key event and perform a function corresponding to the touch screen event.

According to another embodiment of the present invention an electronic device is provided that includes a touch screen; an input key installed near the touch screen; and a control unit configured to receive signals from the input key and the touch screen, wherein the control unit is further configured to begin a count when a touch screen event is detected from the touch screen, to determine whether an input key event is valid when the input key event is detected from the input key before a count time exceeds a predefined critical time, and when the input key event is invalid, to ignore the input key event and perform a function corresponding to the touch screen event.

Another aspect of the invention provides a computer program comprising instructions arranged, when executed, to implement a method in accordance with any one of the above-described aspects. A further aspect provides machine-readable storage storing such a program.

### BRIEF DESCRIPTION OF THE DRAWINGS

The above and other aspects, features, and advantages of certain embodiments of the present invention will be more apparent from the following detailed description taken in conjunction with the accompanying drawings, in which:
FIG. 1 is a block diagram illustrating a mobile device in accordance with an embodiment of the present invention;
FIG. 2 is a flowchart illustrating a touch event processing method in accordance with an embodiment of the present invention.
FIGS. 3 and 4 are front screen views illustrating cases of ignoring a touch key event in accordance with embodiments of the present invention;
FIGS. 5 and 6 are front screens views illustrating cases of executing a touch key event in accordance with embodiments of the present invention;
FIG. 7 is a flowchart illustrating a touch event processing method in accordance with another embodiment of the present invention;
FIG. 8 is a flowchart illustrating a touch event processing method in accordance with still another embodiment of the present invention; and
FIG. 9 is a flowchart illustrating a touch event processing method in accordance with yet another embodiment of the present invention;

### DETAILED DESCRIPTION OF EMBODIMENTS OF THE PRESENT INVENTION

The following description with reference to the accompanying drawings is provided to assist in a comprehensive understanding of various embodiments of the present invention as defined by the appended claims. It includes various specific details to assist in that understanding but these are to be regarded as mere examples. Accordingly, those of ordinary skill in the art will recognize that various changes and modifications of the embodiments described herein can be made without departing from the scope of the present invention. In addition, descriptions of well-known functions and constructions may be omitted for clarity and conciseness.

The terms and words used in the following description and claims are not limited to their dictionary meanings, but are merely used to enable a clear and consistent understanding of the present invention. Accordingly, it should be apparent to those skilled in the art that the following description of various embodiments of the present invention is provided for illustration purposes only and not for the purpose of limiting the present invention as defined by the appended claims and their equivalents.

It is to be understood that the singular forms "a," "an," and "the" include plural referents unless the context clearly dictates otherwise. Thus, for example, reference to "a signal" includes reference to one or more of such signals.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Herein, an electronic device refers to any kind of device that has a touch screen panel. Specifically, an electronic device may include a mobile phone, a smart phone, a tablet PC, a video phone, an e-book reader, a desktop PC, a notebook PC, a laptop PC, a netbook computer, a personal digital assistant (PDA), a portable multimedia player (PMP), a media player (e.g., an MP3 player), a mobile medical device, a digital camera, a digital broadcasting terminal, a portable game console, an electronic dictionary, an electronic scheduler, a wearable device (e.g., a head-mounted-device (HMD) such as electronic glasses, electronic clothes, an electronic bracelet, an electronic necklace, an electronic appcessory, an electronic tattoo, a smartwatch, etc.), home appliance, and any other equivalents.

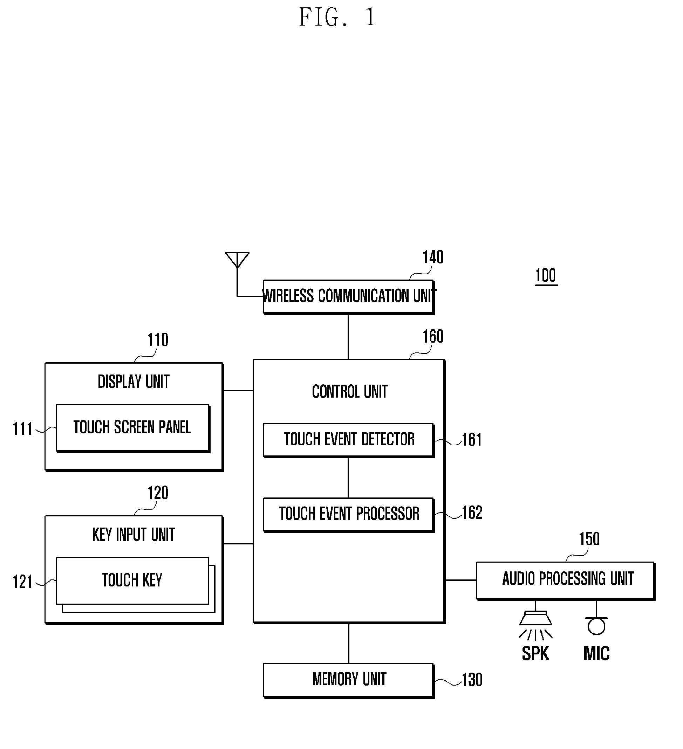

FIG. 1 is a block diagram illustrating a mobile device in accordance with an embodiment of the present invention.

Referring to FIG. 1, the mobile device 100 may include a display unit 110, a key input unit 120, a memory unit 130, a wireless communication unit 140, an audio processing unit 150, a speaker SPK, a microphone MIC, and a control unit 160.

The display unit 110 may display data on a screen under the control of the control unit 160. Namely, when the control unit 160 processes (e.g., decodes) data and then stores the processed data in a buffer, the display unit 110 may convert the data stored in the buffer into analog signals and then display the data on the screen. Specifically, when electric power is supplied to the display unit 110, the display unit 110 may display a lock image on a screen thereof. If a predefined unlock event is detected, the control unit 160 may perform an unlock process and control the display unit 110 to display any other predefined image such as a home image. Such a home image may contain a background image (e.g., a photo image selected by a user) and a plurality of icons displayed and arranged thereon. Each icon may indicate a specific application or content (e.g., a photo file, a video file, a voice recording file, a document, a message, etc.). If a user selects one of such icons, for example, an application icon, the control unit 160 may execute a specific application linked to the selected icon. Then the display unit 110 may receive an execution image of application from the control unit 160 and display it thereon.

The display unit 110 may display images in a multi-layered structure under the control of the control unit 160. For example, the display unit 110 may display an execution image of application (e.g., a web page) on a screen and further display a keypad thereon.

The display unit 110 may include an LCD (Liquid Crystal Display), OLED (Organic Light Emitted Diode), AMOLED (Active Matrix OLED), a flexible display, or a transparent display.

The display unit 110 may include a touch screen panel 111 installed on a screen thereof. Specifically, the touch screen panel 111 may be disposed on the screen of the display unit 110 (i.e., referred to as add-on type) or inserted in the display unit 110 (i.e., referred to as on-cell type or in-cell type).

The touch screen panel 111 may create a touch event in response to a user's gesture on a screen, perform an analog-to-digital conversion, and transfer a digital signal to the control unit 160. A touch event may include at least one set of touch coordinates (x, y). For example, a touch IC (Integrated Circuit) of the touch screen panel 111 may detect a user's touch, determine a touched region in response to the detected touch, and transfer touch coordinates (x, y) contained in the touched region to the control unit 160. Herein, touch coordinates may use pixel units. For example, in case a screen has a resolution of 640 pixels in width and 480 pixels in length, coordinates covers 0 to 640 at the X-axis and 0 to 480 at the Y-axis. If any touch coordinates are received from the touch screen panel 111, the control unit 160 may determine that a touch occurs on the touch screen panel 111 by means of a touch input tool (e.g., finger or pen). If touch coordinates are no longer received from the touch screen panel 111, the control unit 160 may determine that a touch is released from the touch screen panel 111. Additionally, if touch coordinates are varied from (x₀, y₀) to (x₁, y₁) for example, and if its variation D (e.g., D²=(x₀-x₁)²+(y₀-y₁)²) exceeds a predefined critical value (e.g., 1 mm), the control unit 160 may determine that a touch input tool is moved, namely, a touch movement happens on the touch screen panel 111. In response to such a touch movement, the control unit 160 may calculate a location variation (dx, dy) of a touch and a velocity of a touch movement. Specifically, based on touch coordinates, whether a touch is released or not, whether a touch is moved or not, a location variation of a touch, and a velocity of a touch movement, the control unit 160 may determine, from a user's gesture, one of a touch, a multi touch, a tap, a double tap, a long tap, a tap-and-touch, a drag, a flick, a press, a pinch-in, a pinch-out, and the like.

A touch refers to a gesture to make a touch input tool be in contact with any point on the screen, and a multi touch refers to a gesture to make two or more touch input tools (e.g., thumb and forefinger) be in simultaneous contact with two or more points. A tap refers to a gesture to touch any point on the screen and then release (namely, touch-off) a touch input tool from the touch point without moving it, and a double tap refers to a gesture to tap twice the same point on the screen. A long tap refers to a gesture to touch relatively longer than a tap and then release a touch input tool from the touch point without moving it. A tap-and-touch refers to a gesture to tap any point on the screen and then touch the same point within a given time (e.g., 0.5 second). A drag refers to a gesture to move a touch input tool in an arbitrary direction while maintaining a touch on the screen. A flick refers to a gesture to move a touch input tool more quickly than a drag and then release the touch input tool. A press refers to a gesture to touch any point on the screen and maintain a touch more than a given time (e.g., 2 seconds). A pinch-in refers to a gesture to touch simultaneously two points on the screen and then to narrow a distance between the touch points. A pinch-out refers to a gesture to touch simultaneously two points on the screen and then to widen a distance between the touch points.

The touch panel 111 may be a complex touch screen panel that is composed of a finger touch screen panel for detecting a finger gesture and a pen touch screen panel for detecting a pen gesture. The finger touch screen panel may be formed of a capacitive type, a resistive type, an infrared type, or an ultrasonic type. The finger touch screen panel may create a touch event by a user's finger gesture or any other equivalent (e.g., an action of a conductive tool capable of causing a change in capacitance). Meanwhile, the pen touch screen panel may be formed of an electromagnetic induction type. Therefore, the pen touch screen panel may create a touch event by a stylus pen which is specially produced to form a magnetic field. Particularly, a touch event created from the pen touch screen panel may contain, together with touch coordinates, a value for indicating the type of touch. For example, in case the first voltage level value is received from the pen touch screen panel, the control unit 160 may consider a touch to be an indirect touch (also known as hovering). If the second voltage level value greater than the first voltage level value is received from the pen touch screen panel, the control unit 160 may consider a touch to be a direct touch. Also, a touch event created from the pen touch screen panel may further contain a specific value for indicating whether any key installed in a pen is pressed. If such a key is pressed, a magnetic field generated from a coil in the pen may be varied. Then the pen touch screen panel may create the third voltage level value and transfer it to the control unit 160.

The key input unit 120 may have at least one touch key 121, which normally refers to all kinds of input units which can recognize a touch or approach of a human body or any other object. Specifically, the touch key 121 may include a capacitive type touch key that detects an approach of a human body or any other object having conductibility and regards it as an input, a press type touch key that detects a variation in mechanical pressure from a resistive layer and regards it as an input, an optical type touch key that detects a variation in the amount of incident light rays and regards it as an input, an infrared type touch key that detects a variation in the amount of incident infrared rays and regards it as an input, and the like. Additionally, the touch key 121 may include a soft key that is virtually present on a touch panel and acts as a separate input unit through software processing on a part of a physically continuous surface of the touch panel. Also, the touch key 121 may include any other electronic or mechanical key. The touch key 121 may be also referred to as an input key.

The touch key 121 may create a specific event in response to a user's touch gesture and transfer it to the control unit 160. Additionally, the touch key 121 may be disposed near or on the screen (e.g., near the bottom of the screen). For example, in response to an event from the first touch key (e.g., a menu open key), the control unit 160 may control the display unit 110 to display a menu at a lower part of the screen. Also, in response to an event from the second touch key (e.g., a revert key), the control unit 160 may control the display unit 110 to display a previous image. For example, if an event of the second touch key happens when a keypad is displayed on a search page, the keypad disappears and the search page remains being still displayed.

The key input unit 120 may further include any type key other than a touch type key. For example, the key input unit 120 may have at least one dome key. If a user presses down a dome key, the dome key is transformed and thereby comes in contact with a printed circuit board. Therefore, a key event is created from the printed circuit board and transferred to the control unit 160. Such a dome key may be disposed at a lateral side of the mobile device 100 or near the screen (e.g., near the bottom of the screen).

This key event may include a power on/off event, a volume adjusting event, a screen on/off event, a shutter event, and the like. The control unit 160 may control various elements, as listed above, of the mobile device 100 in response to such a key event. Meanwhile, a key of the key input unit 120 may be referred to as a hard key, and a virtual key displayed on the display unit 110 may be referred to as a soft key.

The memory unit 130 may include a disk, RAM, ROM, flash memory, and the like. The memory unit 130 may store, under the control of the control unit 160, data created in the mobile device 100 or received from any external entity (e.g., a server, a desktop PC, a tablet PC, etc.) through the wireless communication unit 140. Also, the memory unit 130 may temporarily store data copied from a message, a photo, a webpage, a document, or the like by a user who desires a copy and paste. And also, the memory unit 130 may store various setting values (e.g., screen brightness, a feedback vibration in response to a touch, an automatic rotation of screen, etc.) required for the operation of the mobile device 100.

The memory unit 130 may store a booting program, at least one operating system (OS), and a variety of applications. The OS not only acts as an interface between hardware and each application and between respective applications, but also manages computer resources such as a CPU, a GPU, a main memory unit, and the memory unit 130. Applications may be classified into embedded applications and third party applications. For example, embedded applications may include a web browser, an email program, an instant messenger, and the like. When electric power is supplied from a battery to the control unit 160, a booting program is loaded on a main memory unit of the control unit 160. Then the booting program loads the OS on the main memory unit, and the OS loads a selected application on the main memory unit.

The wireless communication unit 140 may perform a voice call, a video call, or a data communication with any external entity through a network under the control of the control unit 160. Normally, the wireless communication unit 140 may include an RF (radio frequency) transmitter that up-converts the frequency of an outgoing signal and then amplifies the signal, and an RF receiver that amplifies with low-noise an incoming signal and down-converts the frequency of the signal. Also, the wireless communication unit 140 may include a mobile communication module (e.g., a 3-Generation mobile communication module, a 3.5-Generation mobile communication module, a 4-Generation mobile communication module, etc.), a digital broadcast module (e.g., a DMB module), and/or a short-range communication module (e.g., a Wi-Fi module, a Bluetooth module, or an NFC (Near Field Communication) module).

The audio processing unit 150 may perform the input and output of audio signals (e.g., voice data) for speech recognition, voice recording, digital recording, and a call in conjunction with the speaker SPK and the microphone MIC. Specifically, the audio processing unit 150 may receive audio signals from the control unit 160, convert the received audio signals into analog signals through a digital-to-analog conversion, then amplify and output them to the speaker SPK. Further, the audio processing unit 150 may receive audio signals from the microphone MIC, convert the received audio signals into digital signals through an analog-to-digital conversion, and then transfer them to the control unit 160. The speaker SPK may convert audio signals received from the audio processing unit 150 into sound waves and then output them. The microphone MIC may convert sound waves collected from people or any other sound source into audio signals.

The control unit 160 may control the entire operation of the mobile device 100, control signal flows between internal components of the mobile device 100, perform data processing, and control the supply of power from a battery to the respective components.

Additionally, the control unit 160 may include at least one central processing unit (CPU). As well known, the CPU is a key control unit of a computer system that performs calculation and comparison of data and interpretation and execution of commands. The CPU may further include various registers that temporarily store data or commands. The control unit 160 may include at least one graphic processing unit (GPU). The GPU is a graphic control unit that performs, in place of the CPU, calculation and comparison of graphic-related data and interpretation and execution of related commands. Each of the CPU and GPU may be formed of a single package into which two or more independent cores (e.g., quad-core) are integrated as a single integrated circuit (IC). Namely, the CPUs may be integrated as a single multi-core processor, and the GPUs may be integrated as a single multi-core processor. Alternatively, the CPU and GPU may be integrated into a single chip (i.e., system on chip (SoC)). Alternatively, the CPU and GPU may be packaged in the form of multi-layer. A structure having the CPU and GPU may be referred to as an application processor (AP), which may further include ISP.

The control unit 160 may include a main memory unit, for example, RAM. The main memory unit may store various programs such as a booting program, an operating system and applications which are loaded from the memory unit 130. Namely, the control unit 160 (e.g., AP) may access such programs, interpret commands of such programs, and perform particular functions (e.g., a function to detect and process a touch event) based on the result of interpretation. Also, the control unit 160 may further include a cache memory that temporarily stores data to be written in the memory unit 130 and data read from the memory unit 130.

The control unit 160 may include a touch event detector 161 and a touch event processor 162. The touch event detector 161 may detect a touch screen event from the touch screen panel 111. Additionally, the touch event detector 161 may detect a touch key event from the touch key 121.

According to one embodiment, when a touch key event and a touch screen event are detected simultaneously, the touch event detector 161 may determine whether a touch key event is valid. Here, a simultaneous detection may mean that a touch key event and a touch screen event are detected within a given time. For example, when a touch screen event is detected within 100 ms after the detection of a touch key event, this may be regarded as a simultaneous detection.

Similarly, when a touch key event is detected within 100 ms after the detection of a touch screen event, this may be regarded as a simultaneous detection. Meanwhile, whether a touch key event is valid may be determined using touch coordinates. Detailed descriptions will be given below.

When a touch key event is invalid, the touch event detector 161 may transfer a touch screen event only to the touch event processor 162. When a touch key event is valid, the touch event detector 161 may transfer both touch events to the touch event processor 162. For example, the touch event detector 161 may transfer touch events to the touch event processor 162 in the detected order. The touch event processor 162 may receive a touch event and perform a corresponding function.

Meanwhile, the mobile device 100 may further include any other elements such as a camera, an ear jack, a GPS (Global Positioning System) module, a vibration motor, an accessory, and the like. An accessory is any item detachable from the mobile device 100 and may be for, example, a touch pen.

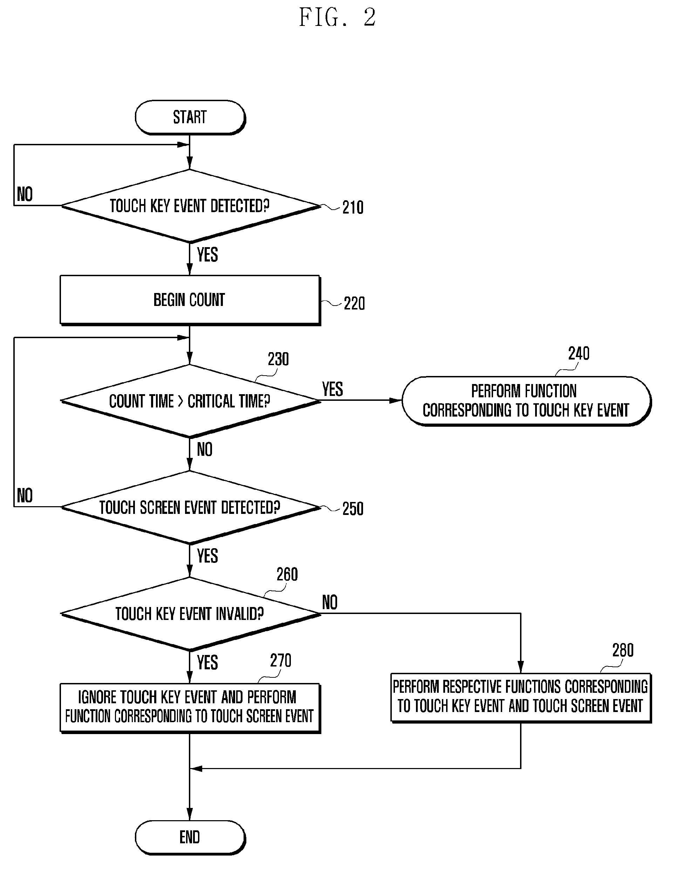

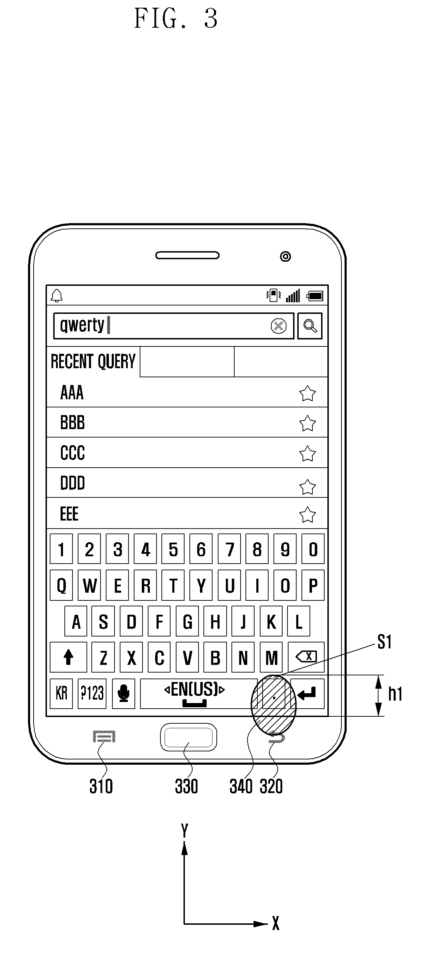

FIG. 2 is a flowchart illustrating a touch event processing method in accordance with an embodiment of the present disclosure. FIGS. 3 to 6 are front screen views illustrating a touch event processing method in accordance with embodiments of the present invention.

Referring to FIG. 2, at step 210, the control unit 160 determines whether a touch key event is detected.

If a touch key event is detected, the control unit 160 begins a count at step 220. In other words, when a touch key event is detected, the touch event detector 161 of the control unit 160 may not immediately transfer the detected event to the touch event processor 162 of the control unit 160, but instead temporarily store it in a memory (e.g., a cache memory).

At step 230, the control unit 160 determines whether a count time exceeds a predefined critical time (e.g., 100 ms).

If the count time exceeds a critical time, the touch event detector 161 of the control unit 160 transfers the temporarily stored touch key event to the touch event processor 162, which performs a particular function corresponding to the touch key event at step 240.

If the count time fails to exceed a critical time, the control unit 160 determines at step 250 whether a touch screen event is detected.

If a touch screen event is detected within a critical time after the detection of a touch key event, the control unit 160 determines at step 260 whether the temporarily stored touch key event is valid.

For example, if the control unit 160 receives one or more touch coordinates from the touch screen panel 111, the control unit 160 checks the number of received touch coordinates. If this number exceeds a predefined critical value, the control unit 160 may determine that a touch key event is invalid. Otherwise, the control unit 160 may determine that a touch key event is valid.

In another example, the control unit 160 calculates the area of a touched region, using the number of received touch coordinates. If this area is greater than a predefined area value, the control unit 160 may determine that a touch key event is invalid. Otherwise, the control unit 160 may determine that a touch key event is valid.

In still another example, the control unit 160 calculates the length of a longer axis (e.g., the Y-axis) in a touched region, using the received touch coordinates. If this length is greater than a predefined length value, the control unit 160 may determine that a touch key event is invalid. Otherwise, the control unit 160 may determine that a touch key event is valid. In this case, a shorter axis (e.g., the X-axis), the circumference of a touched region, the radius of a touched region, or the like may be alternatively calculated instead of the longer axis.

In yet another example, if the calculated area is greater than a predefined area value, and further if the calculated length is greater than a predefined length value, the control unit 160 may determine that a touch key event is invalid. Otherwise, the control unit 160 may determine that a touch key event is valid.

Similarly, touch coordinates may be used to determine whether a touch event is valid. Instead of the above techniques, any other technique may be alternatively used for determination of validity. Although in the above examples a touch event is determined to be valid when a length or area is greater than a critical value, in other examples a touch event may be determined to be valid when a length or area is smaller than a critical value. Namely, if the calculated area is smaller than a predefined area value, the control unit 160 may determine that a touch key event is invalid, and otherwise, determine that a touch key event is valid. Similarly, if the calculated length is smaller than a predefined length value, the control unit 160 may determine that a touch key event is invalid, and otherwise, determine that a touch key event is valid.

If the touch key event is invalid at step 260, the control unit 160 ignores the temporarily stored touch key event and performs only a function corresponding to a touch screen event at step 270. Namely, the touch event detector 161 of the control unit 160 may not transfer a touch key event to the touch event processor 162 and delete it from a memory. Therefore, the touch event processor 162 may receive a touch screen event only and perform a particular function corresponding to a touch screen event.

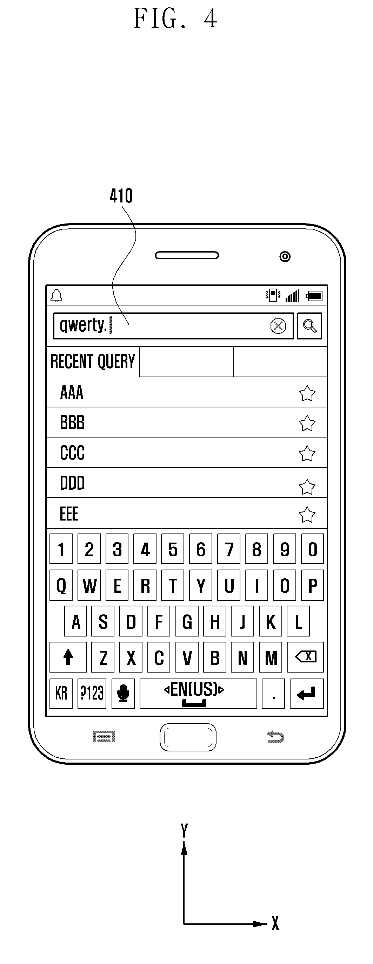

Referring to FIGS. 3 and 4, a virtual keypad is displayed at a lower part of the screen, and touch keys 310 and 320 are installed near the bottom of the screen. Further, a non-touch type key, e.g., a dome key 330, is installed between the first and second touch keys 310 and 320. Of course, the key disposed between the touch keys 310 and 320 may be a touch type key.

As shown in FIG. 3, a user may touch a certain region 340 by means of a touch input tool (e.g., finger). Because of its proximity to region 340, a touch key event may happen at the second touch key 320 and be transferred to the control unit 160. Further, a touch screen event may happen at the touch screen panel 111 and be transferred to the control unit 160. In this case, the touch screen event may contain one or more touch coordinates. The touch event detector 161 may postpone the transfer of the touch key event from the second touch key 320 and, using the touch coordinates received from the touch screen panel 111, determine whether the touch key event is valid.

For example, as shown in FIG. 3, let's suppose that the area S1 of the touched region 340 is greater than a predefined area value and that the length h1 of a longer axis (the Y-axis) is greater than a predefined length value. If so, the detector 161 may not transfer the touch key event to the touch event processor 162 and transfer only the touch screen event to the touch event processor 162. Then the touch event processor 162 may perform a function corresponding to the touch screen event. For example, as shown in FIG. 4, the touch event processor 162 may control the display unit 110 to display a period '.' in an input window 410.

Returning to FIG. 2, if the touch key event is valid, the touch event detector 161 of the control unit 160 transfers both the touch key event and the touch screen event to the touch event processor 162 at step 280. Therefore, the touch event processor 162 performs respective functions corresponding to such events. At this time, if a function corresponding to the touch screen event is not associated with a function corresponding to the touch key event, the touch event processor 162 does not perform a function corresponding to the touch screen event.

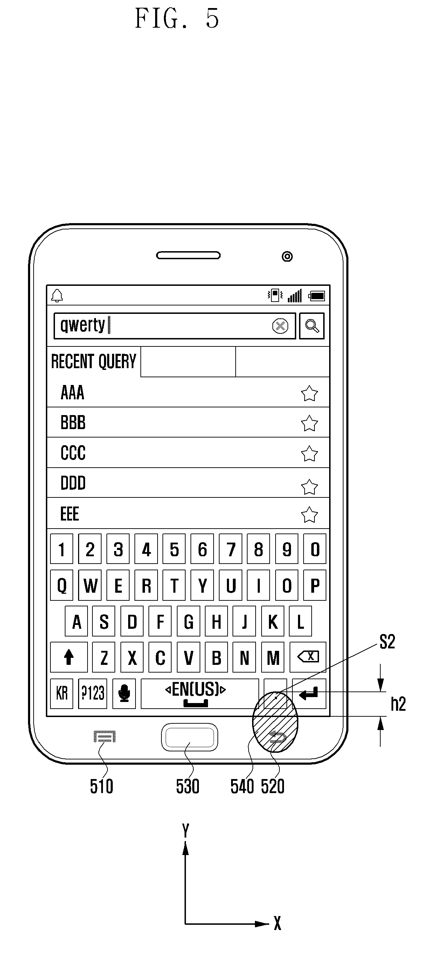

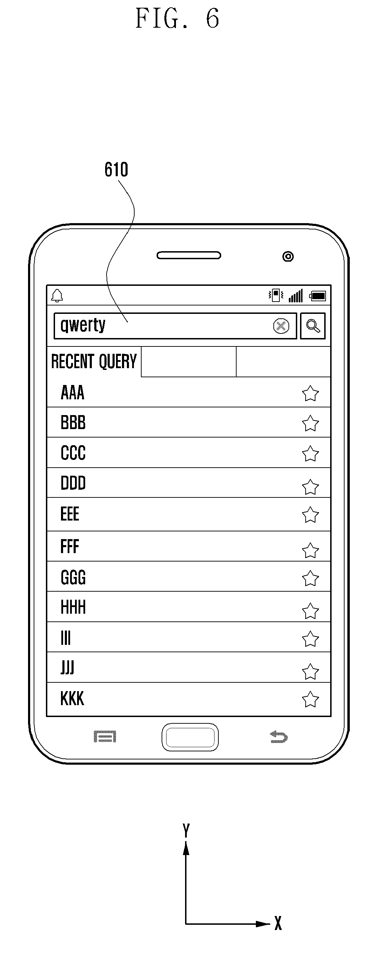

Referring to FIGS. 5 and 6, a virtual keypad is displayed at a lower part of the screen, and touch keys 510 and 520 are installed near the bottom of the screen. Further, another key, e.g., a dome key 530, is installed between the first and second touch keys 510 and 520.

As shown in FIG. 5, a user may touch a certain region 540 by means of a touch input tool (e.g., finger). Then a touch key event may happen at the second touch key 520 and be transferred to the control unit 160. Further, a touch screen event may happen at the touch screen panel 111 and be transferred to the control unit 160. The touch event detector 161 may postpone the transfer of the touch key event from the second touch key 520 and, using the touch coordinates received from the touch screen panel 111, determine whether the touch key event is valid.

For example, as shown in FIG. 5, let's suppose that the area S2 of the touched region 540 is smaller than a predefined area value and that the length h2 of a longer axis (the Y-axis) is smaller than a predefined length value. If so, the touch event detector 161 may transfer both the touch key event and the touch screen event to the touch event processor 162. Then the touch event processor 162 may perform respective functions corresponding to such events.

In this case, a function corresponding to the touch screen event may not be performed. For example, as shown in FIG. 6, the touch event processor 162 may close a display of the keypad in response to the touch key event of the second touch key 520. Further, if a function corresponding to the touch screen event is to display a period '.' in an input window 610, the touch event processor 162 may determine that this function is not associated with the second touch key 520, and thus may not respond to the touch screen event. Therefore, as shown in FIG. 6, a period '.' may not be displayed in the input window 610.

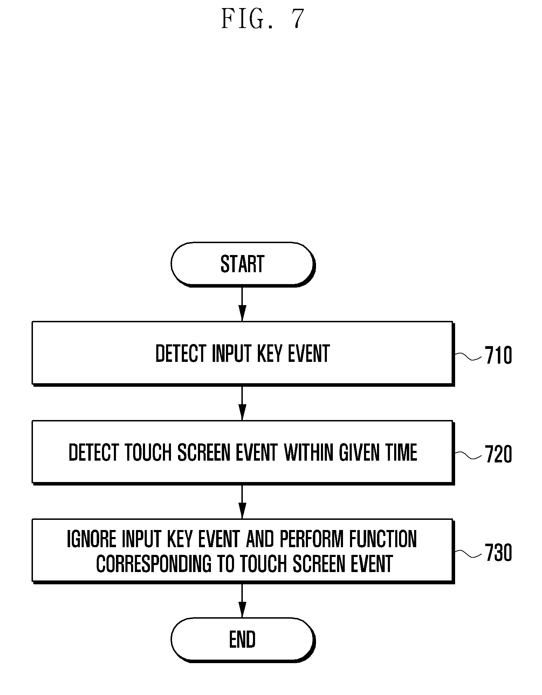

FIG. 7 is a flowchart illustrating a touch event processing method in accordance with another embodiment of the present invention.

Referring to FIG. 7, at step 710, the touch event detector 161 of the control unit 160 detects an input key event. Then the touch event detector 161 may postpone the transfer of the detected input key event for a given time (e.g., 100 ms). At step 720, the touch event detector 161 detects a touch screen event within such a given time. Then, at step 730, the control unit 160 ignores the input key event and performs a function corresponding to the touch screen event. Namely, the touch event detector 161 does not transfer the input key event to the touch event processor 162 and transfers only the touch screen event to the touch event processor 162. The touch event processor 162 receiving the touch screen event only performs a particular function corresponding to the touch screen event.

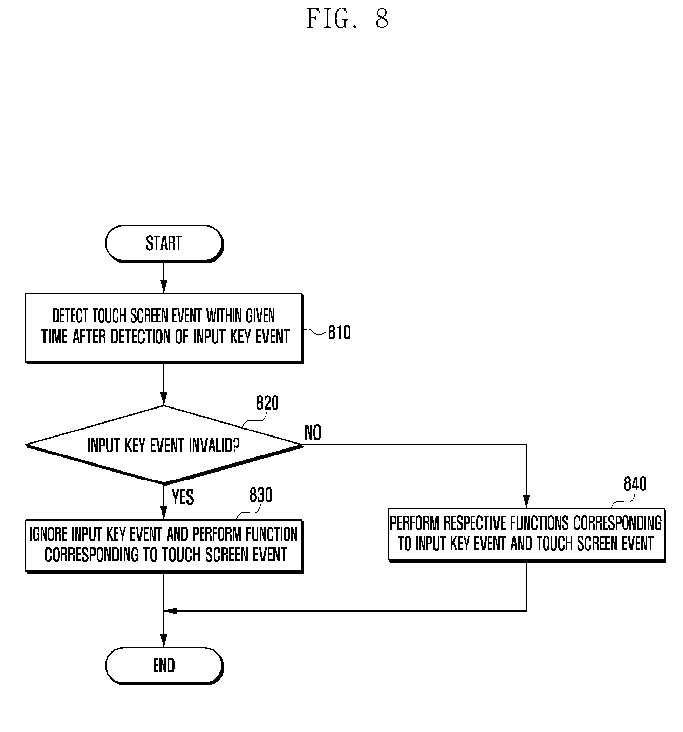

FIG. 8 is a flowchart illustrating a touch event processing method in accordance with still another embodiment of the present invention.

Referring to FIG. 8, at step 810, the touch event detector 161 of the control unit 160 detects a touch screen event within a given time (e.g., 100 ms) after the detection of an input key event.

In this case, the touch event detector 161 determines at step 820 whether the input key event is valid. This determination of validity may be accomplished using the above-discussed techniques. If the input key event is invalid, the touch event detector 161 does not transfer the input key event to the touch event processor 162 at step 830. Therefore, the touch event processor 162 receives the touch screen event only and performs a function corresponding to the touch screen event. If the input key event is valid, the touch event detector 161 transfers both the input key event and the touch screen event to the touch event processor 162 at step 840. Therefore, the touch event processor 162 performs respective functions corresponding to such events. At this time, if a function corresponding to the touch screen event is not associated with a function corresponding to the input key event, the touch event processor 162 does not perform a function corresponding to the touch screen event.

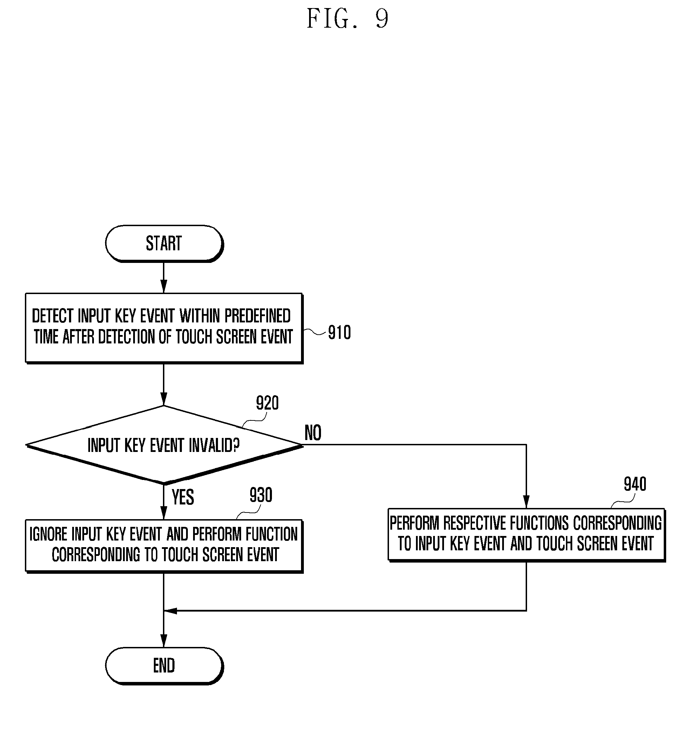

FIG. 9 is a flowchart illustrating a touch event processing method in accordance with yet another embodiment of the present invention.

Referring to FIG. 9, at step 910, the touch event detector 161 of the control unit 160 detects an input key event within a given time (e.g., 100 ms) after the detection of a touch screen event.

In this case, the touch event detector 161 determines at step 920 whether the input key event is valid. This determination of validity may be accomplished using the above-discussed techniques. If the input key event is invalid, the touch event detector 161 does not transfer the input key event to the touch event processor 162 at step 930. Therefore, the touch event processor 162 receives the touch screen event only and performs a function corresponding to the touch screen event. If the input key event is valid, the touch event detector 161 transfers both the input key event and the touch screen event to the processor 162 at step 940. Therefore, the touch event processor 162 performs respective functions corresponding to such events. At this time, if a function corresponding to the touch screen event is not associated with a function corresponding to the input key event, the touch event processor 162 does not perform a function corresponding to the touch screen event.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. In particular, the above-discussed method is described herein with reference to flowchart illustrations of user interfaces, methods, and computer program products according to embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block or blocks.

Each block of the flowchart illustrations may represent a module, segment, or portion of code, which comprises one or more executable instructions for implementing the specified logical function(s). It should also be noted that in some alternative implementations, the functions noted in the blocks may occur out of the order shown. For example, two blocks shown in succession may in fact be executed substantially concurrently or the blocks may sometimes be executed in the reverse order, depending upon the functionality involved.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

While the present invention has been particularly shown and described with reference to certain embodiments thereof, it will be understood by those skilled in the art that various changes in form and details may be made therein without departing from the scope of the invention as defined by the appended claims.

## Claims

1. A method for operating an electronic device having a touch screen and an input key, the method comprising:
detecting a first event comprising one of an input key event from the input key of the electronic device and a touch screen event from the touch screen;
detecting a second event within a given time after the detection of the first event, the second event comprising the other of an input key event from the input key of the electronic device and a touch screen event from the touch screen; and
performing a function corresponding to the touch screen event while ignoring the input key event.

2. The method of claim 1, further comprising:
when the second event is detected within the given time after the detection of the first event, determining whether the input key event is valid or invalid.

3. The method of claim 2, wherein determining whether the input key event is valid or invalid comprises:
calculating an area of a touched region on the touch screen by using one or more touch coordinates contained in the touch screen event, and determining whether the calculated area is greater or smaller than a predefined area value;
calculating a length based on a touched region on the touch screen by using one or more touch coordinates contained in the touch screen event, and determining whether the calculated length is greater or smaller than a predefined length value; or
calculating both an area of a touched region and a length based on the touched region on the touch screen by using one or more touch coordinates contained in the touch screen event, and determining whether the calculated area is greater than a predefined area value and also whether the calculated length is greater than a predefined length value.

4. The method of claim 2 or claim 3, further comprising:
when the input key event is valid, performing a function corresponding to at least the input key event from among the input key event and the touch screen event.

5. An electronic device comprising:
a touch screen;
an input key; and
a control unit configured to detect an input key event from the input key and a touch screen event from the touch screen;
wherein if the control unit detects a second event comprising one of an input key event from the input key of the electronic device and a touch screen event from the touch screen within a given time after detecting a first key event comprising the other of an input key event from the input key of the electronic device and a touch screen event from the touch screen, the control unit is further configured to ignore the input key event and to perform a function corresponding to the touch screen event.

6. The electronic device of claim 5, wherein the input key is installed near the touch screen.

7. The electronic device of claim 5 or claim 6, wherein when a second event is detected within the given time after a first event is detected, the control unit is further configured to determine whether the input key event is valid or invalid.

8. The electronic device of claim 7, wherein the control unit is further configured to determine whether the input key event is valid or invalid by:
calculating an area of a touched region on the touch screen by using one or more touch coordinates contained in the touch screen event, and determining whether the calculated area is greater or smaller than a predefined area value;
calculating a length based on a touched region on the touch screen by using one or more touch coordinates contained in the touch screen event, and determining whether the calculated length is greater or smaller than a predefined length value; or
calculating both an area of a touched region and a length based on the touched region on the touch screen by using one or more touch coordinates contained in the touch screen event, and determining whether the calculated area is greater than a predefined area value and also whether the calculated length is greater than a predefined length value.

9. The electronic device of claim 7 or claim 8, wherein when the input key event is valid, the control unit is further configured to perform a function corresponding to at least the input key event from among the input key event and the touch screen event.

10. The electronic device of any one of claims 5 to 9, wherein the control unit is further configured to determine whether a second event is detected within a given time after detecting a first event by beginning a count when a first event is detected and determining whether the second event is detected before a count time exceeds a predefined critical time.
